# EUROPEAN PATENT APPLICATION

(11) **EP 1 375 042 A1**
(43) Date of publication of application: **02.01.2004**
(21) Application number: 02425395.7
(22) Date of filing: 17.06.2002
(51) Int. Cl.: B23D 47/00, B28D 1/04

(54) **Machine for splitting strips of stone materials and the like in two**

(71) Applicant: Veronesi, Ilario, 37020 Cerro Veronese (Verona) (IT)
(72) Inventor: Veronesi, Ilario, 37020 Cerro Veronese (Verona) (IT)
(74) Representative: Lanzoni, Luciano

(57) **Abstract**

Machine for splitting strips of stone materials (2) and the like in two, comprising a load-bearing structure (3), a discoidal blade (7) defining a cutting plane, and at least an element (12) for guiding the blade (7). The load-bearing structure (3) identifies a cutting area (6) in correspondence with which is defined a plane of lay for a strip (2) to be split in two, and is constituted by a base (4) able to be set down on the ground and by a movable body (5) bearing the blade (7) and mounted in sliding fashion on the base (4) according to a direction of sliding that is perpendicular to the cutting plane, to allow adjusting the thickness of the cut. The guiding element (12) is positioned in proximity to the outer edge (16) of the blade (7), the cutting area (6) being between the guiding element (12) and the centre (15) of the blade (7).

## Description

The present invention relates to a machine for splitting strips of stone materials and the like in two, comprising the characteristics expressed in the preamble to claim 1.

In particular, it refers to a machine destined to split in two strips of natural stones such as marble, granite and the like, as well as other materials such as cement conglomerates, etcetera.

In any case, for the sake of simplicity of description, in the present description reference shall mainly be made to natural stones, without thereby implying any limitation to the usage capabilities of the machine.

To obtain thin strips of marble, a method has long been used whereby strips are primarily obtained with machines called block cutters, directly from a stone block taken from the quarry.

Secondarily, the strips produced by the block cutter are sectioned using appropriate splitting machines which are fitted with thinner disks than those of the block cutters. The splitting operation allows to obtain, from a strip of material (for instance, marble) having a certain thickness, two strips whose thickness is roughly half the original one. The production of the block cutters is thereby multiplied and the exploitation of the block is enhanced, whilst obtaining less wastage due to the material lost during the cutting of the strips.

One of the first machines devised to carry out this operation provided for a vertical cut involving the entire depth of the material with one or more disks mounted parallel.

The diamond-coated crown of the disks barely projected from the cut, for maximum exploitation of the cutting capacity of the disk itself.

The disks are constituted by a support, generally called core, made of very strong steel, having small thickness and on whose outer circumference are fastened cutting elements, such as dusts or diamond-coated inserts.

The disks are locked at the centre on a spindle by means of flanges for about one third of their diameter, thereby allowing to use only a third of the diameter of the tool for the working depth.

This is due to the fact that a lesser flanging would compromise its stability and planarity during its operation.

With this technical solution, however, defects occurred in the planarity of the cuts and thus strips with inconsistent thickness were obtained; this factor led to the disappearance of this type of machines.

It is also clear that to assure a greater planarity, it was possible to use disks with greater thickness or flanges of greater diameter, with the drawback, however, of a reduction in cutting precision, and an increase of material wastage (as the area of material corresponding to the cut is lost), coupled with a longer time required for the machining and to a greater consumption of abrasive material (diamond) and energy.

According to the embodiments that currently are most widely used, slitting machines comprise a conveyor belt whereon the strips are positioned (vertically or horizontally), parallel whereto, and at a predefined distance substantially corresponding to the thickness of the strips to be obtained, rotate one or more pairs of mutually opposed cutting disks.

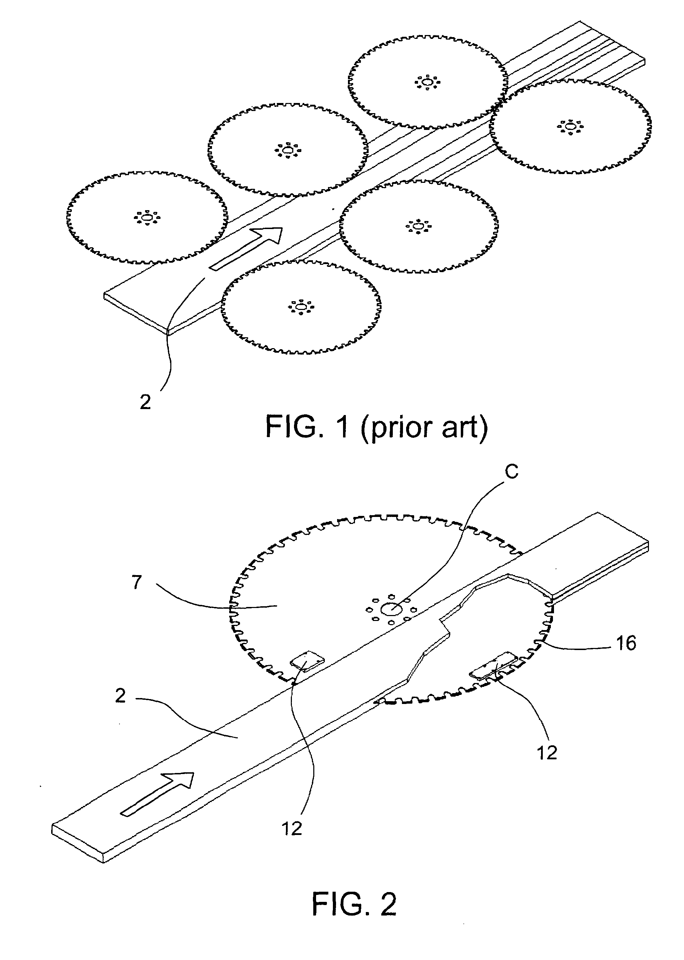

In the case of multiple pairs, the disks work in series with decreasing distances between centres, so that each of them effects a part of the depth of the cut, until the complete execution thereof (Figure 1 schematically shows six disks and the lower half of the strip).

This system allows the disks subsequent to the first to effect their part of cut partially penetrating into the cut effected by the previous disk and using it as a guide, in such a way as to allow greater cut advancements and lesser deviations thereof.

It is evident that using the solution with opposite disks, the diameter (and consequently the thickness necessary to perform the complete sectioning operation) is reduced and therefore wastage is also more limited.

In practice, as matters currently stand, machines are used that have two, four, six or more disks arranged in series and mutually opposite to section strips of marble or granite with maximum length of about 600 mm with disks having a minimum thickness of about 7 mm.

However, this solution itself is no free from drawbacks.

These tools have operating limitations that are direct consequences both of the flexibility of the disks themselves and of the fragility of the material to be cut. The disks cannot have a high diameter-to-thickness ratio because they must not be deformed or vibrate during the cutting operation. As a result, the minimum thickness of the obtainable strips is affected by the fragility of the material and by the vibrations of the disks.

Moreover, when using multiple disks, each of which has its own working plane and subjected to its own deviations, as their number grows it becomes very complicated, if not impossible, to control their individual deviations with precision, in order to keep them all on the same plane and achieve a perfect cut with reduced thickness.

On the contrary, after the splitting operation, on the sectioned surface the parallel marks of tangency of the various disks are always visible, along with, oftentimes, differences - however minimal - in the thickness of the strips with the consequence that their subsequent calibration becomes necessary.

In this situation, the technical task constituting the basis for the present invention is to obtain a machine for splitting strips of stone materials and the like in two, that overcomes the aforementioned drawbacks.

In particular, the technical task of the present invention is to obtain a machine for splitting strips of stone materials and the like in two that can obtain the cut by means of a single disk of large diameter and reduced thickness.

Another aim of the present invention is to provide a machine able to cut granite or other materials of similar hardness, with a single pass (i.e. with a single disk for the entire cutting depth).

The specified technical task and the indicated aims are substantially achieved by a machine for splitting strips of stone materials and the like in two, as described in the accompanying claims.

Further features and advantages of the invention shall become more readily apparent from the detailed description of some preferred but not exclusive embodiments of a machine for splitting strips of stone materials and the like in two, illustrated purely in the accompanying drawings, in which:
- Figure 1 shows a schematic perspective view the operating mode of a traditional splitting machine;
- Figure 2 shows a schematic perspective view of the operating mode of a splitting machine according to the present invention;
- Figure 3 shows a lateral elevation view of a machine according to the present invention with some parts removed the better to highlight others.
- Figure 4 shows a plant view of the machine of Figure 3 during the cutting of a strip of material;
- Figure 5 shows a plan view of a detail of the machine of Figure 3;
- Figure 6 shows a lateral elevation view of the detail of Figure 5;
- Figure 7 shows a cross section of a machine obtained according to the present invention during the cutting of a strip of material;
- Figure 8 shows an enlarged detail of the machine of Figure 7;
- Figure 9 shows an embodiment variation of the detail of Figure 8; and
- Figures 10 to 19 show ten embodiments of sliding blocks of the machine according to the present invention.

With reference to the accompanying figures, the reference number 1 globally indicates a machine for splitting strips 2 of stone materials and the like, according to the present invention.

The machine 1 comprises a load bearing structure 3 constituted by a base 4 and by a movable body 5.

The base 4 can be set down onto the ground and identifies a cutting area 6 in correspondence with which is defined a plane of lay for a strip 2 to be split in two, which is in the accompanying figures is horizontal.

Nonetheless, said plane could equally be positioned vertically or with any other inclination, depending on requirements.

The movable body 5 supports a discoidal blade 7 rotating in a cutting plane parallel to the plane of lay of the strip 2, and which projects in part in the cutting area 6. The blade 7 is kept rotating by an appropriate motor 8 through a transmission belt 9.

Note that in other embodiments the blade could also assume non discoidal shape, without thereby departing from the scope of the present invention (for instance, blade provided with transverse motion relative to the direction of advance of the strips to be cut).

Moreover, the movable body 5 is mounted in sliding fashion on the bade 4 according to a direction of sliding that is perpendicular to the cutting plane (vertical in the accompanying figures), to allow adjusting the thickness of the cut.

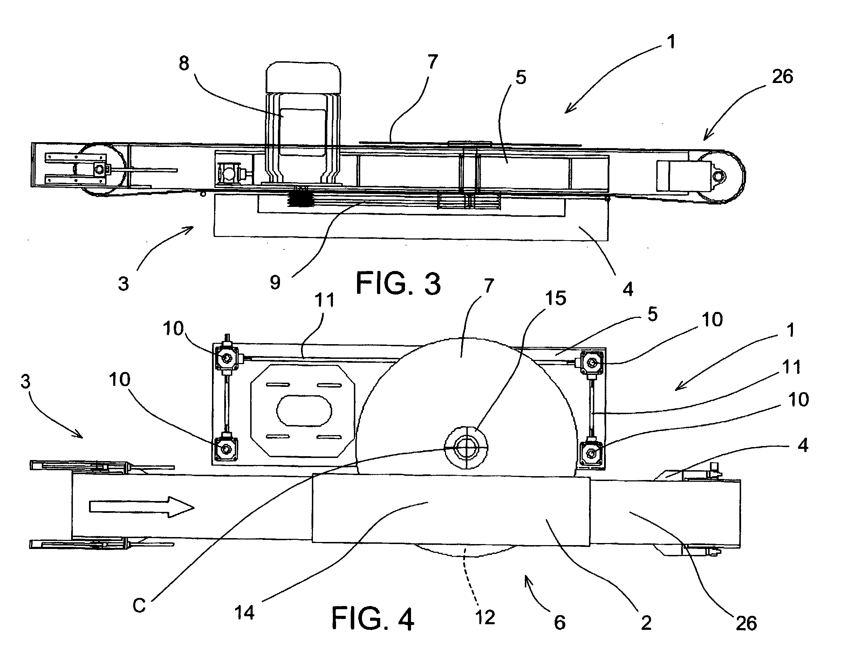

The movement of the movable body 5 relative to the cutting plane is achieved by means of four threaded bars 10 (Figure 4) actuated in synchrony by means of a plurality of transmission rods 11.

Advantageously, the machine 1 further comprises at least an element 12 for guiding the blade 7 positioned eccentrically with respect to it, and operatively active on at least one face 13 of the blade 7 itself to guide it during the cutting operations.

In the illustrated embodiments, multiple guiding elements 12 can be provided, distributed on the surface of the blade 7 outside the cutting area 6.

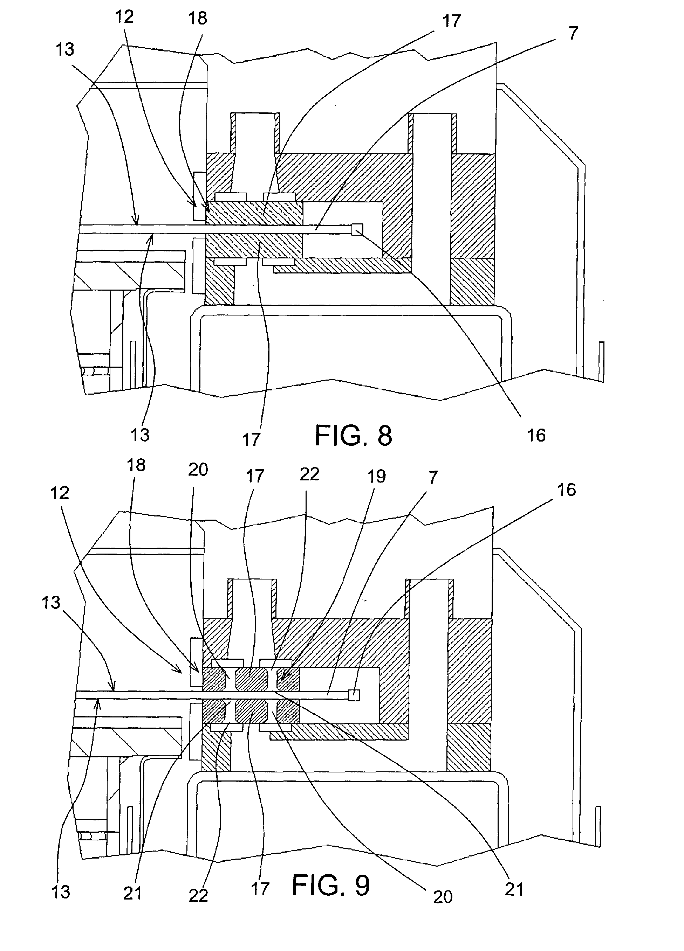

In the preferred embodiments (Figures 7, 8 and 9) the blade 7 is so designed as to project sufficiently from the strip 2 to be split (Figure 2) and the cutting area 6 is identified (in plan view) in correspondence with a circular segment 14 with two bases identified on the disk 7 which constitutes the blade 7 itself between the centre C (or rather between the outer edge of the flange 15 supporting the blade 7) and the guiding element 12.

Advantageously, at least a guiding element 12 is positioned in correspondence with the edge 16 of the blade 7 which projects from the strip 2, in order to maintain the disk 7 as stable as possible during the cutting phases.

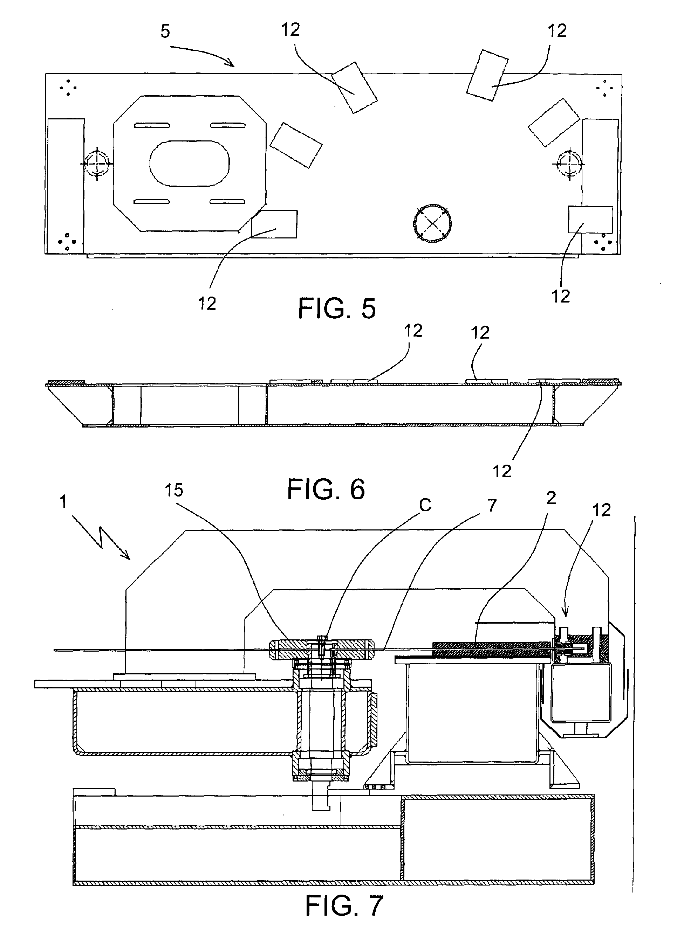

As shown in Figure 5, the other guiding elements 12 are positioned in correspondence with the half disk 7 not directly involved in the cutting operations.

Although in the illustrated embodiments each guiding element 12 is constituted by one or two sliding blocks 17, this should be construed as limiting, since guiding elements 12 of a different kind, for instance electromagnetic, can be provided.

In a first embodiment, each guiding element 12 is constituted by a sliding block 17 positioned below or above the blade 7.

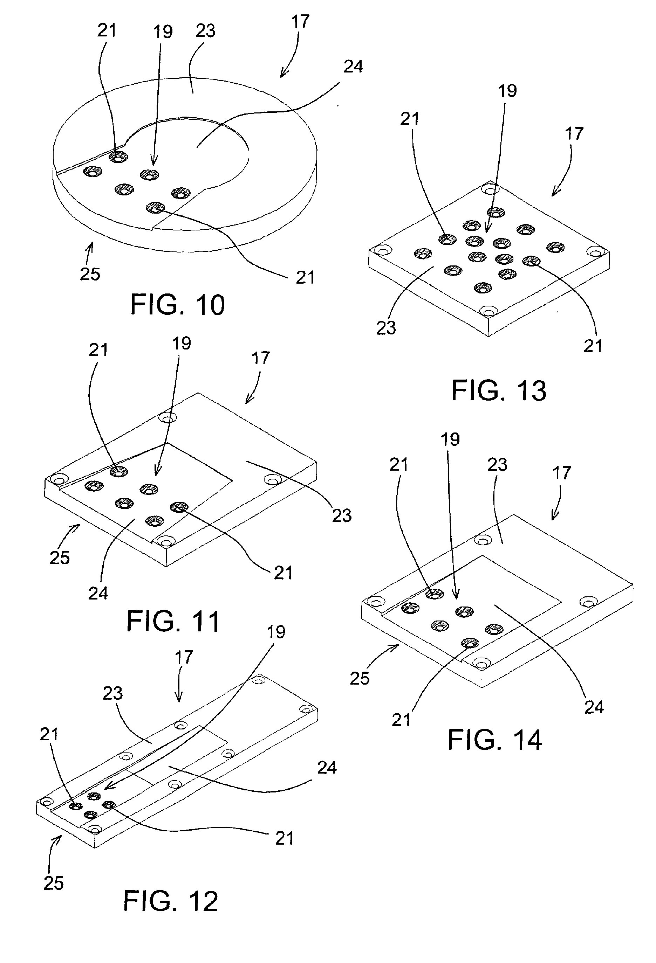

In the preferred embodiment, in any case, each guiding element 12 is constituted by a pair of sliding blocks 17 arranged facing each other one above and one below the blade 7, which form a positioning jaw 18 operatively active on the blade 7 itself (Figures 8 and 9).

Since the velocity of rotation of the blade 7 is high, preferably to each sliding block 17 are associated means 19 for dispensing a fluid between the sliding block 17 itself and the blade 7 (Figure 9).

In this way the fluid (which is usually water) creates a lubricating layer between the sliding block 17 and the blade 7 which prevents, or at least greatly reduces, its wear and overheating.

The possible embodiments of the sliding blocks 17 and of the dispensing means 19 are numberless, and the accompanying Figures 10 through 19 show only some examples.

In particular, in the embodiments of Figures 10 through 14, the dispensing means 19 are partially integrated in the sliding blocks 17, since they are constituted by a plurality of channels 20 obtained in the sliding block 17 and presenting each a first open end 21 oriented towards the blade 7 and a second end 22 connected to means for supplying the fluid (not shown herein).

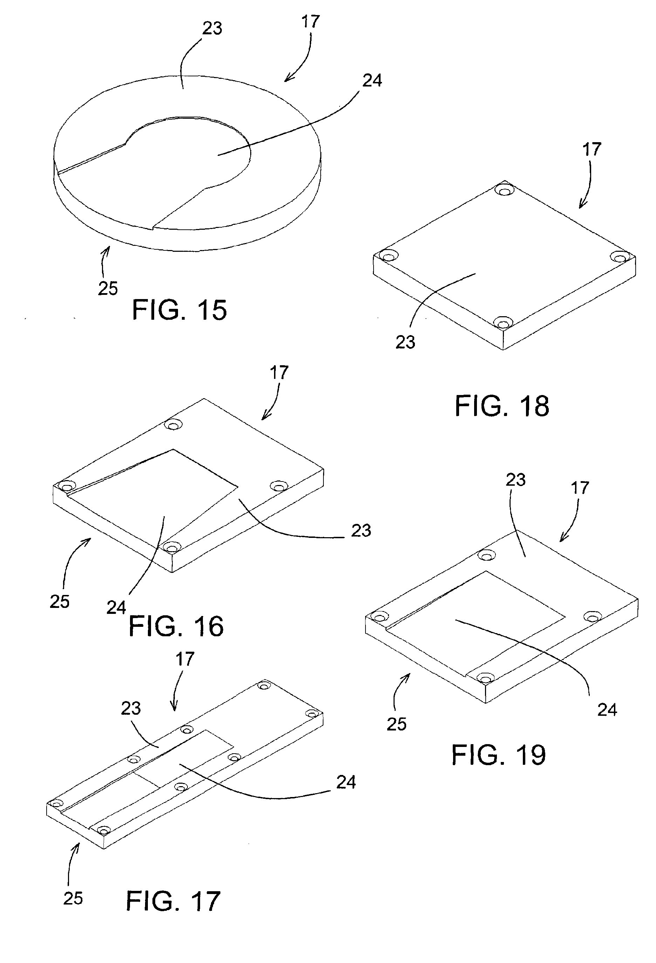

In regard to the embodiments of Figures 15 through 19, the dispensing means 19 can comprise a nozzle (not shown herein) positioned in front of the sliding block 17 which sprays the water towards the point in which the blade 7 is inserted between the sliding blocks 17.

As shown, in some embodiments, the surface 23 of the sliding block 17 oriented towards the blade 7 has at least an inclined portion 24 converging towards the blade 7, which develops from a main edge 25 of the sliding block 17 towards the interior thereof, and which serves as a guide for the fluid that is dispensed in proximity to the main edge 25.

Advantageously, the main edge 25 represents the inlet section of the blade 7 in the area underlying the sliding block 17. Both the nozzle, if provided, and the first ends of the channels 20 are located in proximity to the main edge 25 where the distance of the sliding block 17 from the blade 7 is greater and where it is therefore easier for the water to penetrate between sliding block 17 and blade 7. Moreover, the mutual motion between blade 7 and sliding block 17 facilitates the formation of the water film, because the water is driven by friction from the main edge 25 towards the interior of the sliding block 17.

The machine 1 illustrated in the accompanying drawings further comprises a conveyor belt 26 for supplying the strips 2 to be split in two to the cutting area 6, along whose path is identified the cutting area 6.

The operation of the machine 1 of the present invention derives directly from the description provided heretofore.

With the blade 7 kept rotating, the strip 2 to be split is made to advance by the conveyor belt 26 against the blade 7 which cuts it.

In the meantime the dispensing means 19 continuously dispense water on the sliding blocks 17 in such a way as to maintain a fluid film between the sliding blocks 17 and the blade 7, thereby assuring the correct positioning of the blade 7 itself.

When it is necessary to change the splitting thickness, it is sufficient to actuate the threaded bars 10 making them complete a suitable number of turns to determine the required vertical displacement.

The present invention achieves important advantages.

In the first place, the splitting machine of the present invention is able to cut strips of material using less thick disks than those currently used, with a consequent material saving, always assuring, thanks to the guiding element, the correct positioning of the guide.

Secondly, using a single disk allows to overcome all problems connected with using multiple disks arranged in series and mutually opposite, which, as stated, because of the differences present in their planes of rotation, have different deviations and consequently do not guarantee the right planarity of the cutting plane.

The splitting machine of the present invention therefore allows to increase the cutting precision of the strips relative to currently used machines.

It should also be noted that the present invention is easy to realise and that the cost connected to the implementation of the invention is not very high relative to the standards of the industry.

The invention thus conceived can be subject to numerous modifications and variations, without thereby departing from the scope of the inventive concept that characterises it.

All components can be replaced by other technically equivalent elements and in practice all materials used, as well as the shapes and dimensions of the various components, can be any depending on requirements.

## Claims

1. Machine for splitting strips (2) of stone materials and the like in two, comprising a load-bearing structure (3) identifying a cutting area (6) in correspondence with which is defined a plane of lay for a strip (2) to be split, and a blade (7) mounted on said load-bearing structure (3) and movable in a cutting plane, **characterised in that** it comprises at least an element (12) for guiding said blade (7) operatively active on at least one face (13) of the blade (7) itself to guide it during the cutting operations.

2. Machine as claimed in claim 1 **characterised in that** said load-bearing structure (3) comprises a base (4) able to be set down on the ground and a movable body (5) bearing said blade (7) and mounted in sliding fashion on the base (4) according to a direction of sliding perpendicular to the cutting plane, to allow adjusting the thickness of the cut.

3. Machine as claimed in claim 2 **characterised in that** said guiding element (12) is integral with the movable body (5).

4. Machine as claimed in any of the previous claims **characterised in that** said blade (7) is discoidal and **in that** said guiding element (12) is positioned in proximity to the outer edge (16) of the blade (7), said cutting area (6) being said guiding element (12) and the centre (15) of the blade (7) itself.

5. Machine as claimed in any of the previous claims **characterised in that** said guiding element (12) is constituted by at least a sliding block (17) facing the face (13) of said blade (7).

6. Machine as claimed in claim 5 **characterised in that** it further comprises means (19) for dispensing a fluid between the sliding block (17) and the blade (7), said fluid creating a lubricating layer between the sliding block (17) and the blade (7).

7. Machine as claimed in claim 6 **characterised in that** said fluid is water.

8. Machine as claimed in claim 6 or 7 **characterised in that** said dispensing means (19) comprise at least a channel obtained in said sliding block (17) and having a first end (21) oriented towards the blade (7) and a second end (22) connected to means for supplying the fluid.

9. Machine as claimed in any of the claims from 5 to 8 **characterised in that** the surface (23) of said sliding block (17) oriented towards the blade (7) has at least a slide portion converging towards the blade (7) and developing from a main edge (25) of the sliding block (17) towards the interior thereof according to a direction that is parallel and consistent with the direction of motion of the blade (7) in correspondence with the sliding block (17).

10. Machine as claimed in claims 8 and 9 **characterised in that** said dispensing means (19) comprise a plurality of channels (20) the first ends whereof are obtained on the inclined portion (24) of the sliding block (17) in proximity to the main edge (25).

11. Machine as claimed in any of the claims from 5 to 10 **characterised in that** said guiding element (12) further comprises at least a second sliding block (17) positioned facing the first sliding block (17) from the other side of the blade (7), and defining with the first sliding block (17) a positioning jaw (18) operatively active on said blade (7).

12. Machine as claimed in any of the previous claims **characterised in that** it comprises a plurality of said guiding elements (12) distributed in correspondence with the surface of the blade (7) positioned outside the cutting area (6).

13. Machine as claimed in any of the previous claims **characterised in that** it further comprises a conveyor belt (26) for supplying the strips (2) to be split in two to the cutting area (6).

14. Machine as claimed in any of the previous claims **characterised in that** said piano of lay and said cutting plane are horizontal.
